# FASCICULE DE BREVET EUROPEEN

(11) **EP 1 242 552 B1**
(45) Date de publication et mention de la délivrance du brevet: **09.02.2005**
(21) Numéro de dépôt: 00985324.3
(22) Date de dépôt: 24.11.2000
(51) Int. Cl.: C09J 7/02, C09D 183/06, C08K 5/00

(54) **COMPLEXE SILICONE RETICULABLE PAR VOIE CATIONIQUE/ADHESIF DONT L'INTERFACE POSSEDE UNE FORCE DE DECOLLEMENT MODULABLE**
KOMPLEX AUS KATIONISCH VERNETZBARER SILIKONVERBINDUNG UND KLEBSTOFF MIT MODULIERBARER TRENNKRAFT AN DEREN SCHNITTSTELLE
CATION-CURABLE SILICONE /ADHESIVE COMPLEX WHEREOF THE INTERFACE HAS RELEASE FORCE CAPABLE OF BEING MODULATED

(30) Priorité: 26.11.1999 FR 9914944
(43) Date de publication de la demande: 25.09.2002
(73) Titulaire: RHODIA CHIMIE, 92512 Boulogne Billancourt Cedex (FR)
(72) Inventeur: DHALER, Didier, F-69160 Tassin (FR); LIEVRE, André, F-69230 Saint-Genis-Laval (FR); MIROU, Christian, F-69005 Lyon (FR); GUYOT, Christophe, F-69005 Lyon (FR)
(74) Mandataire: Bernasconi, Jean Raymond
(86) Numéro de dépôt international: PCT/FR2000/003293
(87) Numéro de publication internationale: WO 2001/038450

(56) Documents cités:
- EP-A- 0 476 925
- DE-A- 19 831 775
- US-A- 5 616 629

## Description

La présente invention concerne d'une manière générale des complexes dits " autocollants " composés notamment d'un revêtement silicone anti-adhésif et d'un revêtement adhésif.

Ce type de complexe est généralement destiné à un usage dans lequel la matrice silicone réticulée ou polymérisée est apposée au niveau d'un support de manière à le rendre anti-adhérent vis-à-vis de l'adhésif. Ce type de complexes trouve notamment des applications dans le domaine des papiers protecteurs adhésifs, étiquettes, papiers décoratifs et rubans adhésifs.

Les huiles ou résines silicones proposées pour obtenir ce type de revêtement à propriétés anti-adhérentes dérivent généralement de systèmes photoréticulables cationiques. Il s'agit plus particulièrement de monomère(s), oligomère(s) et/ou polymère(s) de nature polyorganosiloxane comprenant des radicaux fonctionnels et réactifs aptes à former des pontages intra- et inter- caténaires. Ces systèmes conduisent après polymérisation sous UV ou faisceau d'électrons et en présence d'un amorceur de polymérisation, à des revêtements anti-adhérents qui forment des complexes dits " autocollants " avec les adhésifs que l'on applique à leur surface après siliconage.

Une caractéristique essentielle de ces complexes silicone/adhésif est donc de se prêter à un décollement aisé du revêtement adhésif du revêtement silicone lors de leur utilisation.

Selon la nature des applications envisagées pour ce type de complexe, il serait souhaitable de pouvoir moduler la force de décollement nécessaire à la séparation du revêtement silicone du revêtement adhésif.

En l'espèce, cette force de décollement peut être quantifiée. Bien que ses valeurs puissent varier de manière significative selon la méthode de mesure retenue, on peut globalement la caractériser comme suit pour une vitesse de décollement faible c'est-à-dire de l'ordre de 30 cm/mn et selon la méthode FTM3 :
- une force de décollement inférieure à 15g/cm est considérée comme faible,
- une force de décollement supérieure à 15g/cm et inférieure à 70g/cm est considérée moyenne, et
- une force de décollement supérieure à 70g/cm et de préférence inférieure à 200g/cm est considérée élevée.

La présente invention a précisément pour objet de proposer un complexe silicone/adhésif dont la force de décollement peut être ajustée à la demande et de préférence à une valeur comprise dans la plage énoncée ci-dessus, à savoir entre 15g/cm et 200g/cm.

Plus précisément, la présente invention concerne le domaine des complexes adhésif/silicone polymérisables et/ou réticulables par voie cationique et dont la force de décollement de leur interface silicone / adhésif est modulable photochimiquement.

La demande de brevet DE 198 31 775 A décrit déjà un complexe silicone / adhésif à force de décollement modulable. Toutefois, l'aptitude de ce complexe à manifester une force de décollement modulable est directement liée à la nature chimique de la matrice siliconée. Elle dérive de polyorganosiloxanes acryliques et présente des noeuds de réticulation acrylates. Selon son degré de réticulation, cette matrice silicone manifeste une adhésion plus ou moins importante vis-à-vis du film adhésif qui lui est associé. Par ailleurs, dans cet art antérieur, la présence d'un sel de chrome dans la matrice siliconée est requise pour la manifestation de cette propriété.

Pour sa part, la présente invention vise à proposer un complexe silicone / adhésif dont l'aptitude à manifester une force de décollement modulable est liée à la présence d'un additif spécifique au sein de la matrice silicone.

Plus particulièrement, la présente invention a pour premier objet un complexe silicone/adhésif comprenant au moins un revêtement silicone appliqué sur un premier support et un revêtement adhésif appliqué sur un second support, et dont la force de décollement d'une interface silicone/adhésif est modulable, caractérisé en ce que son revêtement silicone dérive de la polymérisation et/ou réticulation par voie cationique de monomères, oligomères et/ou polymères polyorganosiloxanes portant à titre de groupements réactifs au moins des fonctions époxy, oxétane, dioxolane et/ou alcényléther et en ce que ledit revêtement silicone comprend en outre au moins un additif de régulation de la force de décollement d'une interface silicone/adhésif et dont l'activité est initiée et modulable photochimiquement.

L'activation de l'additif est de préférence réalisée par exposition à défaut du complexe, d'au moins une interface silicone/adhésif à au moins une irradiation photochimique de préférence.

L'utilisation d'une matrice polyorganosiloxane conforme à l'invention pour préparer les complexes revendiqués est particulièrement avantageuse comparativement à une matrice polyorganosiloxane à fonctions acryliques dans la mesure où sa préparation ne nécessite pas un inertage. Contrairement aux acrylates dont la réticulation radicalaire peut être stoppée par la présence accidentelle d'oxygène, les polyorganosiloxanes fonctionnalisés selon l'invention ne sont pas sensibles à l'atmosphère ambiante. Il n'est donc pas indispensable que leur réticulation par voie cationique se déroule en atmosphère inerte.

Selon une première variante, les deux supports sont constitués de deux entités distinctes, disposées de manière à ce que le revêtement de silicone du premier support soit en contact avec le revêtement adhésif du second support. Ce mode de réalisation est en particulier illustré par des systèmes dits étiquettes autocollantes. Dans ce cas particulier, la force de décollement de l'interface silicone/adhésif s'exerce lors de la séparation des deux supports.

Dans une seconde variante, les deux supports sont constitués respectivement par chacune des deux faces d'une même entité. Ce second mode de réalisation est en particulier illustré par les systèmes dits rubans adhésifs. Le revêtement anti-adhérent, c'est-à-dire à base de la matrice silicone et le revêtement adhésif sont mis en contact lors de l'enroulement du support sur lui-même. Dans ce cas, la force de décollement s'exerce au niveau de l'interface silicone/adhésif sous l'effet de la séparation d'une face inférieure avec une face supérieure du matériau.

Selon un mode préféré de l'invention, l'additif de régulation de la force de décollement d'une interface silicone/adhésif retenu dans le cadre de la présente invention est choisi parmi :
- les acryliques organiques,
- les alcényléthers, et
- les silicones acryliques et/ou à fonctions alcényléthers.

Conviennent notamment comme acryliques organiques les espèces acrylates et notamment acrylates epoxydés, acryloglycéropolyesters, acrylates multifonctionnels, acrylo-urétanes, acrylopolyéthers, acrylopolyesters, polyesters insaturés, et acryloacryliques.

Sont plus particulièrement préférés les triméthylpentanediotriacrylate, triacrylate de triméthylol propane, et diacrylate de tripropylène glycol.

En ce qui concerne les alcényléthers, ils peuvent être choisis parmi le cyclohexanediméthanoldivinyléther, le triéthylenglycoldivinyléther (DVE-3), l'hydroxybutylvinyléther, le dodécylvinyléther et les autres vinyléthers commercialisés par la société ISP et notamment décrits dans la demande de brevet WO 99/19371.

Selon une variante préférée de l'invention cet additif est choisi parmi des silicones acryliques et/ou à fonctions alcényléther.

A titre représentatif des dérivés acryliques ou méthacryliques de silicone convenant tout particulièrement à l'invention, on peut plus particulièrement citer les dérivés acryliques, méthacryliques, éthers et esters. Parmi ceux ci conviennent notamment les polyorganosiloxanes à fonction acrylate et/ou méthacrylate liés à la chaîne polysiloxane par une liaison Si-C. De tels dérivés acryliques sont notamment décrits dans les brevets EP 281 718 et FR 2 632 960.

En ce qui concerne les polyorganosiloxanes à fonction alcényléther, ils dérivent généralement d'une réaction d'hydrosilylation entre des huiles contenant des motifs structuraux Si-H et des composés portant des fonctions alcényléther tels des allylvinyléthers, allylvinyloxyéthoxybenzène et analogues. Ce type de composés est notamment référencé dans le brevet US 5 340 898.

Cet additif est contenu dans le revêtement silicone et est bien entendu présent en quantité suffisante pour permettre la régulation de la force de décollement de l'interface adhésif/silicone. Il peut être présent jusqu'à 50% en poids du revêtement silicone exprimé en matière sèche.

Toutefois, l'additif est de préférence employé à raison de 0,1 à 20% environ du poids du mélange total silicone. Bien entendu, la quantité en cet additif est susceptible de varier de manière significative selon qu'il est de nature siliconée ou non.

C'est ainsi que dans le cas particulier où cet additif est un dérivé acrylique organique ou un alcényléther, sa quantité est généralement comprise entre 0,1 et 10% environ, de préférence 0,5 et 5% environ et plus préférentiellement 1 et 3%.

En revanche, un additif de type silicone est de préférence utilisé jusqu'à 20% en poids et de préférence 15% en poids.

Il semble par ailleurs que la quantité en rayonnement exprimée généralement en doses en rayonnement de préférence de type UV soit un paramètre utile pour moduler l'activité de l'additif défini ci-dessus et donc ajuster le niveau de la force de décollement générée par cet additif.

C'est ainsi que dans les exemples figurant ci-après, on note que le niveau d'adhérence entre le revêtement silicone et l'adhésif qui lui est associé, est augmenté significativement après irradiation. Avantageusement, la force de décollement s'avère variable selon le nombre de passages sous les lampes UV et donc de l'énergie UV reçue.

Cette énergie UV peut être dispensée par tout dispositif adéquat, soit sous l'effet de flash ou encore d'éclairage stroboscopique. A titre illustratif et non limitatif des sources en rayons UV susceptibles d'être mises en oeuvre pour activer l'additif, on peut notamment citer les systèmes UV type lampes micro-ondes ou lampes à arc.

De même, la concentration en additif dispersé au sein de la matrice siliconée apparaît comme un paramètre de modulation de cette force de décollement. Cet impact de la concentration en additif sur la force de décollement est en particulier illustré par les résultats figurant dans les exemples ci-après.

En conséquence, l'invention a pour avantage de proposer un complexe silicone / adhésif dont il s'avère possible de modifier la force de décollement au niveau de son interface silicone / adhésif en fonction, d'une part, de la quantité en additif incorporé et, d'autre part, de la quantité en rayonnement appliquée au niveau de cette interface.

En ce qui concerne le revêtement silicone, il peut dériver de la polymérisation et/ou réticulation de polyorganosiloxanes constitués de motifs de formule (II) et terminés par des motifs de formule (I) ou cycliques constitués de motifs de formule (II) représentées ci-dessous : 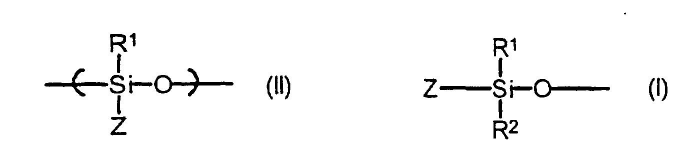 dans lesquelles:
- les symboles R¹ et R² sont semblables ou différents et représentent :
   · un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   · un radical cycloalkyle contenant entre 5 et 8 atomes de carbone cycliques, éventuellement substitué,
   · un radical aryle contenant entre 6 et 12 atomes de carbone pouvant être substitué, de préférence phényle ou dichlorophényle,
   · une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
- les symboles Z sont semblables ou différents et représentent :
   · un groupement R¹ et/ou R²,
   · un radical hydrogène,
   · et/ou un groupement organofonctionnel réticulable, de préférence un groupement époxyfonctionnel, oxétanefonctionnel et/ou dioxolanefonctionnel ou alcénylétherfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
   · avec l'un au moins des symboles Z représentant un groupement organique fonctionnel réticulable.

Selon une variante avantageuse de l'invention, les polyorganosiloxanes utilisés comportent de 1 à 10 groupements organofonctionnels par chaîne macromoléculaire. Pour un groupement époxyfonctionnel cela correspond à des taux d'époxyde variant de 20 à 2000 meq. molaire/100 g de polyorganosiloxane.

Dans le cas de la présente invention, les noeuds de la matrice silicone obtenue sont de type polyéthers.

Les polyorganosiloxanes linéaires peuvent être des huiles de viscosité dynamique à 25°C, de l'ordre de 10 à 10 000 mPa.s à 25°C, généralement de l'ordre de 20 à 5 000 mPa.s à 25°C et, plus préférentiellement encore, de 20 à 600 mPa.s à 25°C, ou des gommes présentant une masse moléculaire de l'ordre de 1 000 000.

Lorsqu'il s'agit de polyorganosiloxanes cycliques, ceux-ci sont constitués de motifs (II) qui peuvent être, par exemple, du type dialkylsiloxy ou alkylarylsiloxy. Ces polyorganosiloxanes cycliques présentent une viscosité de l'ordre de 1 à 5 000 mPa.s.

Comme exemples de radicaux divalents reliant un groupement organofonctionnel du type époxy et/ou oxétane, on peut citer ceux inclus dans les formules suivantes : 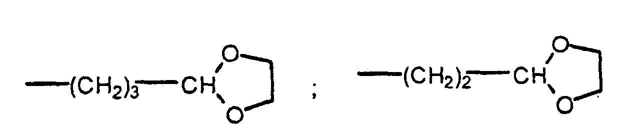 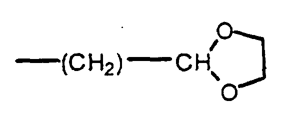 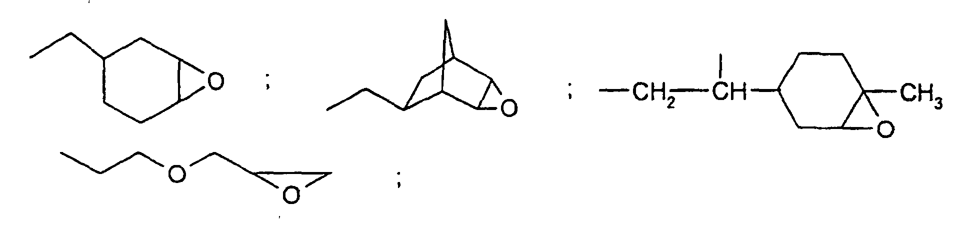 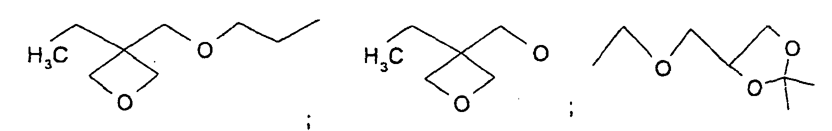 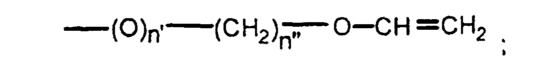 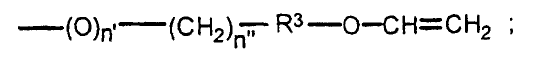 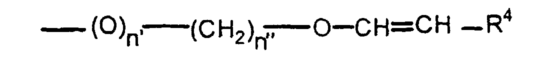 dans lesquelles :
- n' représente 0 ou 1 et n" un entier compris entre 1 et 5
- R³ représente :
   - un radical alkylène linéaire, ramifié ou cyclique en C₁-C₁₂, éventuellement substitué,
   - ou un radical arylène en C₅-C₁₂, de préférence phénylène, éventuellement substitué, de préférence par un à trois groupements alkyles en C₁-C₆,
- R⁴ représente un radical alkyle linéaire ou ramifié en C₁-C₆.

Les polyorganosiloxanes linéaires peuvent être des huiles de viscosité dynamique à 25°C, de l'ordre de 10 à 10 000 mPa.s à 25°C, généralement de l'ordre de 20 à 5 000 mPa.s à 25°C et, plus préférentiellement encore, de 20 à 600 mPa.s à 25°C, ou des gommes présentant une masse moléculaire de l'ordre de 1 000 000.

Lorsqu'il s'agit de polyorganosiloxanes cycliques, ceux-ci sont constitués de motifs qui peuvent être, par exemple, du type dialkylsiloxy ou alkylarylsiloxy. Ces polyorganosiloxanes cycliques présentent une viscosité de l'ordre de 1 à 5 000 mPa.s.

Les polyorganosiloxanes époxy ou vinyloxyfonctionnels se présentent généralement sous forme de fluides présentant une viscosité à 25°C de 10 à 10.000 mm²/s et de préférence de 100 à 600 mm²/s.

La viscosité dynamique à 25°C, de toutes les silicones considérées dans la présente description peut être mesurée à l'aide d'un viscosimètre BROOKFIELD, selon la norme AFNOR NFT 76 102 de février 1972.

Ce type de composés est décrit notamment dans les brevets DE-A-n°4.009.889 ; EP-A- n°396.130 ; EP-A- n°355.381 ; EP-A- n°105.341 ; FR-A- n°2.110.115 et FR-A- 2.526.800.

Les polyorganosiloxanes vinyloxyfonctionnels peuvent être préparés par réaction d'hydrosilylation entre des huiles à motifs Si-H et des composés vinyloxyfonctionnels tels que l'allylvinylether, l'allyl-vinyl oxyethoxybenzène...

Les polyorganosiloxanes époxy fonctionnels peuvent être préparés par réaction d'hydrosilylation entre des huiles à motifs Si-H et des composés epoxyfonctionnels tels que vinyl-4 cyclohexeneoxyde, allylglycidyléther ...

Les polyorganosiloxanes oxétane fonctionnels peuvent être préparés par hydrosilylation d'oxétanes insaturés ou condensation d'oxétanes renfermant une fonction hydroxy.

Les polyorganosiloxanes dioxolane fonctionnels peuvent être préparés par hydrosilylation de dioxolanes insaturés.

Les silicones répondant le mieux à l'objet de l'invention sont décrits ci-dessous et possèdent au moins un groupement époxyde, alcényléther ou oxétane.

Dans les formules ci-après X peut représenter, un groupement alkyle ; cyclohexyle ; trifluoropropyle ; perfluoroalkyle ; alcoxy ou hydroxypropyle, R un radical alkyle en C₁ à C₁₀, cyclohexyle, trifluoropropyle ou perfluoroalkyle en C₁ à C₁₀ et (0≤a≤1000) ; (1≤b≤1000)

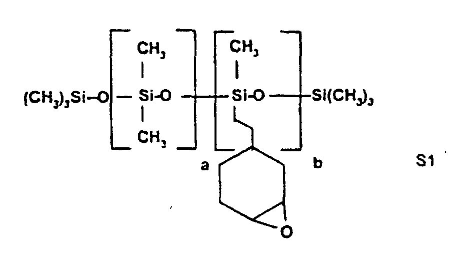

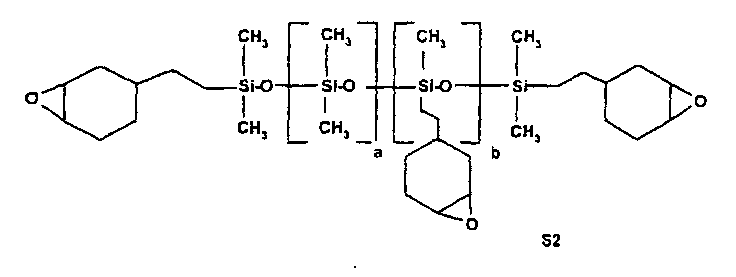

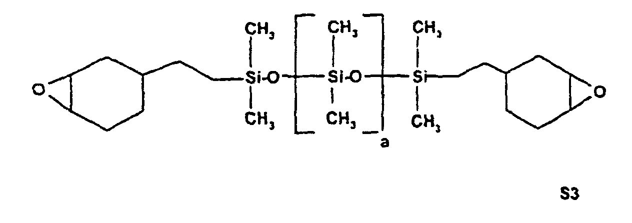

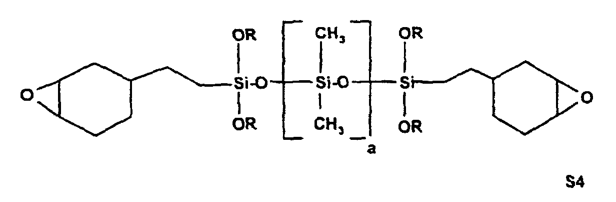

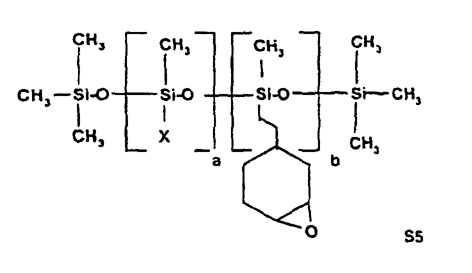

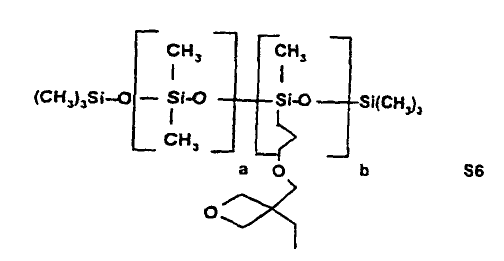

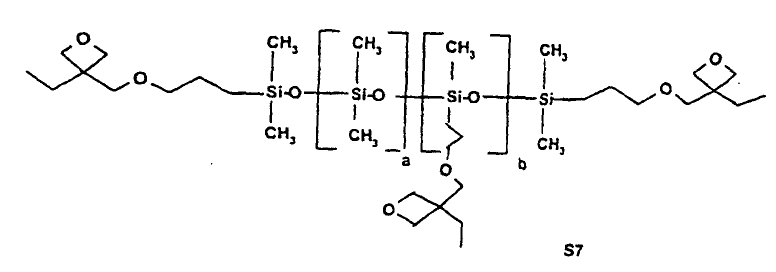

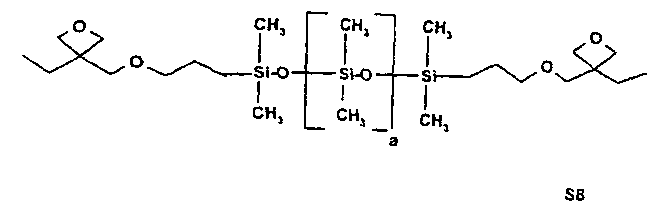

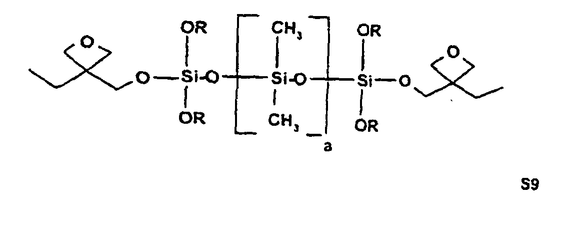

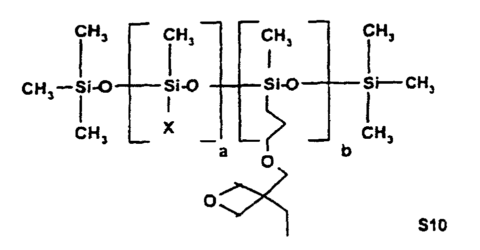

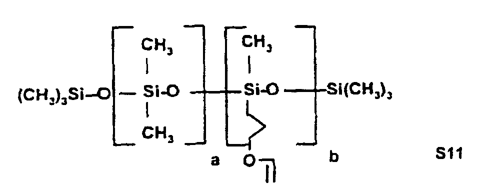

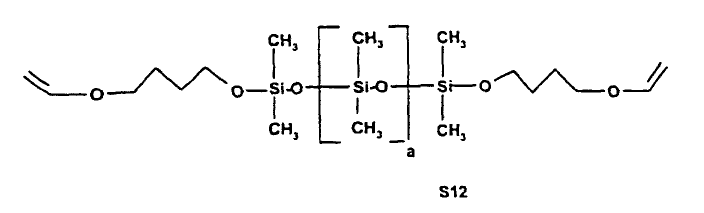

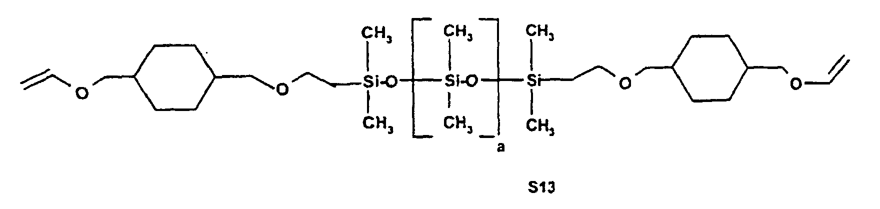

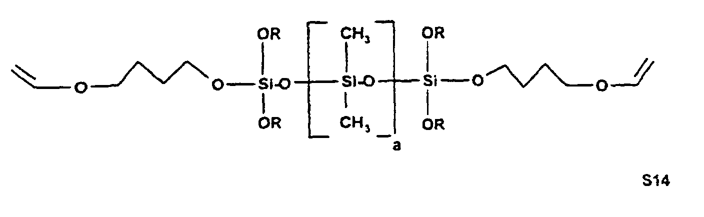

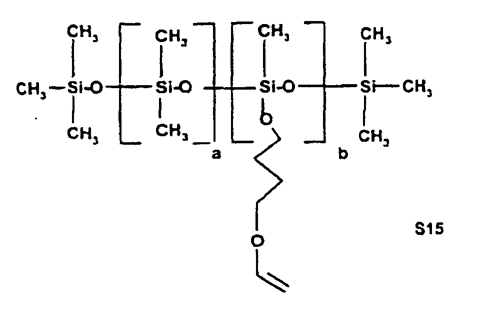

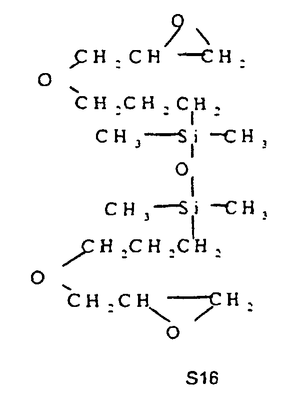

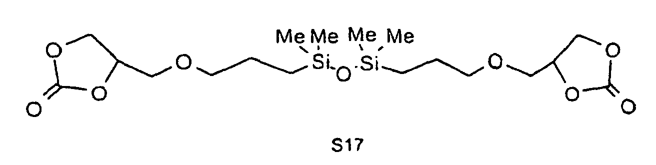

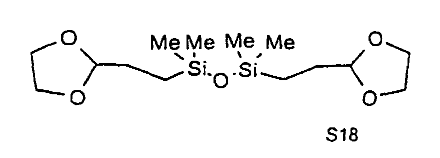

Les conditions réactionnelles de polymérisation et/ou réticulation par photoactivation sont les conditions usuelles. Elles sont généralement initiées en présence d'un photoamorceur incorporé dans la matrice silicone.

Comme photoamorceurs classiques, conviennent notamment ceux décrits dans le brevet EP 562 897. Il peut également s'agir de sels d'iodonium ou de sulfonium correspondant de l'hexafluorophosphate ou hexafluoroantimorate.

Cet amorceur est bien entendu présent en quantité suffisante et efficace pour activer la photopolymérisation et/ou réticulation.

Par quantité efficace d'amorceur, on entend selon l'invention la quantité suffisante pour amorcer la polymérisation et/ou la réticulation. Cette quantité est généralement comprise entre 0,001 et 1 parties en poids, le plus souvent entre 0,005 et 0,5 parties en poids pour polymériser et/ou réticuler 100 parties en poids du revêtement silicone.

Selon une variante préférée de l'invention, le revêtement silicone est une matrice à base d'une huile silicone époxydée.

Outre ce catalyseur, les composants du revêtement silicone peuvent être associés à d'autres additifs.

Il peut s'agir par exemple de charges minérales ou non et/ou de pigments tels des fibres synthétiques ou naturelles de carbonate de calcium, du talc, de l'argile, du dioxyde de titane ou de la silice fumée. Cela peut permettre d'améliorer notamment les caractéristiques mécaniques des matériaux finaux.

Les colorants solubles, les inhibiteurs d'oxydation et/ou tout autre matériau n'interférant pas avec l'activité catalytique du complexe de platine ainsi que l'activité régulatrice de la force de décollement de l'additif peuvent être également ajoutés au composant de la matrice silicone.

S'agissant de l'adhésif, on peut choisir un adhésif acrylique en phase aqueuse, en phase solvant, un caoutchouc en phase aqueuse ou en phase solvant, en acryliques ou en gommes thermofusibles, en latex ou autres adhésifs appropriés.

Conviennent plus particulièrement à l'invention, les adhésifs acryliques en phase aqueuse ou de préférence en phase solvant.

Des adhésifs très couramment utilisés pour être enduits à la surface d'une grande variété de matériaux de façon à obtenir des étiquettes, des rubans ou tout autre matériau autocollant sont des émulsions dites émulsions adhésives sensibles à la pression (PSA) qui dérivent de polymères acryliques. Elles confèrent au matériau la faculté d'adhérer à la surface d'un support, sans nécessiter une autre activation qu'une faible pression. Classiquement, les PSA sont obtenues par polymérisation majoritairement de monomères acrylates d'alkyle qui sont généralement présents à raison de 50 à environ 99 % et de préférence à raison de 80 à 99 % en poids et de monomères polaires copolymérisables comme par exemple de l'acide acrylique, en proportions plus réduites.

Les monomères, mis en oeuvre pour préparer ces PSA, sont sélectionnés en fonction de leur température de transition vitreuse, Tg, pour conférer aux polymères les incorporant, le comportement attendu en termes d'adhérence et de viscoélasticité. A cet effet, les monomères possèdent avantageusement une température de transition vitreuse suffisamment basse, généralement comprise entre -70 et -10 °C et de préférence est inférieure à -30 C.

Plus précisément, ces monomères sont choisis dans le groupe constitué
- des esters(méth)acryliques comme les esters de l'acide acrylique et de l'acide méthacrylique avec les alcanols en C₁-C₁₂ hydrogénés ou fluorés, de préférence C₁-C₈, notamment l'acrylate de méthyle, l'acrylate d'éthyle, l'acrylate de propyle, l'acrylate de n-butyle, l'acrylate d'isobutyle, l'acrylate de 2-éthylehexyle, l'acrylate de tert-butyle, l'acrylate d'hexyle, l'acrylate d'heptyle, l'acrylate d'octyle, l'acrylate d'iso-octyle, l'acrylate de décyle, l'acrylate de dodécyle, le méthacrylate de méthyle, le méthacrylate d'éthyle, le méthacrylate de n-butyle, le méthacrylate d'isobutyle ;
- des nitriles vinyliques dont plus particulièrement ceux ayant de 3 à 12 atomes de carbone, comme en particulier l'acrylonitrile et le méthacrylonitrile ;
- des esters vinyliques d'acide carboxylique comme l'acétate de vinyle, le versatate de vinyle, le propionate de vinyle,
- des acides mono- et di- carboxyliques insaturés éthyléniques comme l'acide acrylique, l'acide méthacrylique, l'acide itaconique, l'acide maléique, l'acide fumarique et les mono- et di-alkylesters des acides mono- et di-carboxyliques du type cité avec les alcanols ayant de préférence 1 à 8 atomes de carbone et leurs dérivés N-substitués,
- des amides des acides carboxyliques insaturés comme l'acrylamide, le méthacrylamide, le N-méthylolacrylamide ou méthacrylamide, les N-alkylacrylamides,
- des monomères éthyléniques comportant un groupe acide sulfonique et ses sels alcalins ou d'ammonium par exemple l'acide vinylsulfonique, l'acide vinylbenzènesulfonique, l'acide alpha-acrylamido méthylpropane-sulfonique, le 2-sulfoéthylène-méthacrylate,
- des monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate ou diméthylaminoéthyl-méthacrylate, le ditertiobutylaminoéthyl-acrylate ou le ditertiobutylaminoéthyl-méthacrylate, le diméthylaminométhyl-acrylamide ou diméthylaminométhyl-méthacrylamide,
- des monomères zwitterioniques comme par exemple l'acrylate de sulfopropyl(diméthyl)aminopropyle,
- des monomères éthyléniques portant un groupement sulfate,
- des monomères éthyléniques portant une ou plusieurs fonction(s) phosphate et/ou phosphonate,
- et leurs mélanges.

De préférence, les monomères, mis en oeuvre dans la polymérisation en émulsion, sont majoritairement des monomères (méth)acrylates d'alkyle, présents à raison de 50 % à environ 99 % et de préférence à raison de 80 % à 99 % en poids par rapport au poids en monomères présents dans l'émulsion.

Plus préférentiellement, ils sont choisis parmi l'acrylate de 2-éthyiehexyle, l'acrylate de butyle, l'acrylate d'hexyle, l'acrylate d'heptyle, l'acrylate d'octyle, l'acrylate d'iso-octyle, l'acrylate de décyle, l'acrylate d'isobutyle, l'acrylate de dodécyle ou leurs mélanges, les méthacrylates comme le méthacrylate de n-butyle, l'acide méthacrylique, l'acide acrylique, l'acide itaconique, l'acide maléique et/ou l'acrylamide.

Les PSA considérés selon la présente invention sont généralement préparés par polymérisation en émulsion par voie radicalaire à pression atmosphérique et à une température généralement comprise entre 10 et 90°C, des monomères correspondants. Classiquement, cette technique de polymérisation requiert, outre l'initiateur radicalaire, un mélange d'émulsifiants anioniques et/ou non ioniques pour stabiliser ladite émulsion. Elle peut également être effectuée en présence d'au moins un monomère dit agent de réticulation.

Ces PSA peuvent bien entendu être utilisés sous une forme formulée, c'est-à-dire en mélange avec des additifs conventionnels des adhésifs tels des agents mouillants, tackifiants,

Classiquement les complexes selon l'invention peuvent comprendre, en outre, un ou plusieurs additifs choisis en fonction de l'application finale visée.

Les additifs peuvent être notamment des composés éventuellement sous forme de polymères, à hydrogènes mobiles comme des alcools, des glycols et des polyols, utiles pour améliorer la flexibilité notamment de la matrice silicone après polymérisation et/ou réticulation ; on peut citer par exemple les polycaprolactones-polyols, en particulier le polymère obtenu au départ de 2-éthyl-2-(hydroxyméthyl)-1,3-propane-diol et de 2-oxépanone tel que le produit TONE POLYOL-301 commercialisé par la Société UNION CARBIDE, ou les autres polymères commerciaux TONE POLYOL 201 et TONE POLYOL 12703 de la société UNION CARBIDE. On peut également citer comme additifs, les diacides à longue chaîne alkyle, les esters gras d'acides insaturés époxydés ou non, par exemple l'huile de soja époxydée ou l'huile de lin époxydée, le 2-éthylhexylester époxydé, le 2-éthylhexyl époxy stéarate, l'époxystéarate d'octyle, les esters acryliques époxydés, les acrylates d'huile de soja époxydés, les acrylates d'huile de lin époxydés, l'éther diglycidique de glycolpolypropylène, les époxydes aliphatiques à longue chaîne, etc..

Il peut s'agir encore, quelle que soit la nature de la matrice polymérisable, par exemple : de charges telles que notamment des fibres synthétiques (polymères) ou naturelles broyées, du carbonate de calcium, du talc, de l'argile, du dioxyde de titane, de la silice de précipitation ou de combustion ; de colorants solubles ; d'inhibiteurs d'oxydation et de corrosion ; de modulateurs d'adhérence organosiliciques ou non ; d'agents fongicides, bactéricides, anti-microbiens ; et/ou de tout autre matériau n'interférant pas avec l'activité de l'additif conforme à l'invention.

Les quantités en revêtement déposées sur les supports sont variables.

Les quantités en revêtement silicone s'échelonnent le plus souvent entre 0,1 et 5 g/m² de surface traitée. Ces quantités dépendent de la nature des supports et des propriétés anti-adhérentes recherchées. Elles sont plus souvent comprises entre 0,5 et 1,5 g/m² pour des supports non poreux.

En ce qui concerne les quantités en revêtement adhésif, elles sont de préférence inférieures à 200g/m² et plus préférentiellement à 100 g/m².

Les supports peuvent être un matériau métallique tel fer blanc, de préférence un matériau cellulosique de type papier ou carton par exemple, ou un matériau polymérique de type vinyle. Des films polymériques thermoplastiques comme le polyéthylène, le prolypropylène ou le polyester sont particulièrement avantageux.

Dans le mode de réalisation où le revêtement adhésif est en contact avec un support constitué d'un second matériau ce second matériau peut être choisi parmi les matériaux proposés pour le premier support et être de nature identique ou non au premier support. Le revêtement adhésif peut être appliqué selon différents modes. Il peut notamment être déposé par transfert.

Enfin, le support sur lequel est appliqué le revêtement silicone et/ou le revêtement adhésif peut déjà être revêtu d'un revêtement initial auquel est superposé un revêtement conforme à l'invention sous réserve que ce revêtement annexe soit transparent aux UV.

La présente invention a également pour objet les articles (feuilles, rubans par exemple) comprenant un complexe conforme à l'invention. Il peut notamment s'agir d'étiquettes, de feuilles autocollantes ou de rubans adhésifs.

Un second aspect de la présente invention concerne l'utilisation d'un additif tel que défini ci-dessus dans un revêtement de silicone conforme à l'invention et destiné à former un complexe silicone / adhésif tel que défini ci-dessus pour la stabilisation des forces de décollement d'une interface silicone / adhésif par activation photochimique dudit additif.

Les exemples et figures figurant ci-après sont présentés à titre illustratif et non limitatif de l'objet de la présente invention.

### Figures :

Figure 1 : Evolution du niveau d'adhérence en fonction du nombre de passages sous la lampe UV, formulation UV sans additif. Adhésif Tesa® 4970.
Figure 2 : Evolution du niveau d'adhérence en fonction du nombre de passages sous la lampe UV d'une formulation UV comprenant différents taux d'additifs constitués de silicone acrylate. Adhésif Tesa® 4970.
Figure 3 : Evolution du niveau d'adhérence en fonction du nombre de passages sous la lampe UV avant et après un cycle de vieillissement de 6j à 70°C. Formulation UV avec additif silicone acrylate . Adhésif Tesa® 4970.
Figure 4 : Evolution du niveau d'adhérence en fonction du nombre de passages sous la lampe UV Formulation UV avec 5% d'huile acrylate. Adhésif Rhodotak® 315P.
Figure 5 : Evolution du niveau d'adhérence en fonction du nombre de passages sous la lampe UV Formulation UV avec 5% d'huile acrylate. Adhésif Rhodotak® 338J.
Figure 6 : Evolution du niveau d'adhérence en fonction du nombre de passages sous la lampe UV Formulation UV avec 5% d'huile acrylate. Adhésif Rhodotak® 300.
Figure 7 : Evolution du niveau d'adhérence en fonction du nombre de passages sous la lampe UV d'une formulation contenant à titre d'additif 0,34 % de TMPTA. Adhésif Tesa® 4970.
Figure 8 : Evolution du niveau d'adhérence en fonction du nombre de passages sous la lampe UV d'une formulation contenant à titre d'additif 5 % de TMPTA. Adhésif Tesa® 4970.
Figure 9 : Evolution du niveau d'adhérence en fonction du nombre de passage sous UV avant et après un cycle de vieillissement ( 6 jours à 70°C), formulation UV avec 5% de TMPTA. Adhésif Tesa® 4970.
Figure 10 : Représentation graphique de l'intensité de la dose d'irradiation UV émise en fonction du nombre de passages sous la lampe UV ( banc IST/vitesse 50m /mn /P160W/cm).

### Matériels et Méthode

Dans les exemples qui suivent, on utilise une formulation silicone constituée d'un système UV cationique développé par Rhodia Chimie avec des additifs.

Le système anti-adhérent UV est constitué :
- d'une huile époxydée de formule : 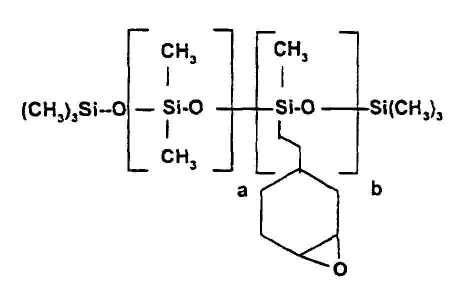
   Il répond à la structure moyenne de distribution aléatoire telle que a=80 ; b=7
- d'un photoamorceur cationique (PI₁ dans l'isopropanol) :

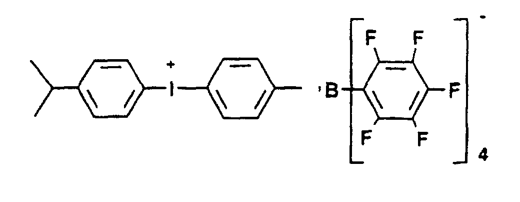

Les additifs conformes à l'invention testés sont :
- une huile silicone avec des fonctions acrylates, de gamme Rhodia : Silcolease ® résine 21621
- un monomère organique acrylique : le tryméthylpentanedioltriacrylate.

Les formulations sont enduites à une vitesse de 50 m/min sur un film polypropylène à l'aide d'un pilote d'enduction Rotomec. Le revêtement siliconé correspondant est réticulé par passage sous une lampe UV Fusion de 80W/cm (tube H⁺). Les dépôts sont de l'ordre de 1,2g/m² pour assurer une bonne couverture du support.

Le revêtement est ensuite adhésivé avec un ruban adhésif acrylique TESA® 4970.

Le complexe ainsi formé est ensuite soumis à une irradiation d'une lampe UV (lampe IST / tube à arc mercure), à une vitesse de 50m/min. Cette irradiation est réalisée au travers du film support polypropylène et de la couche silicone.

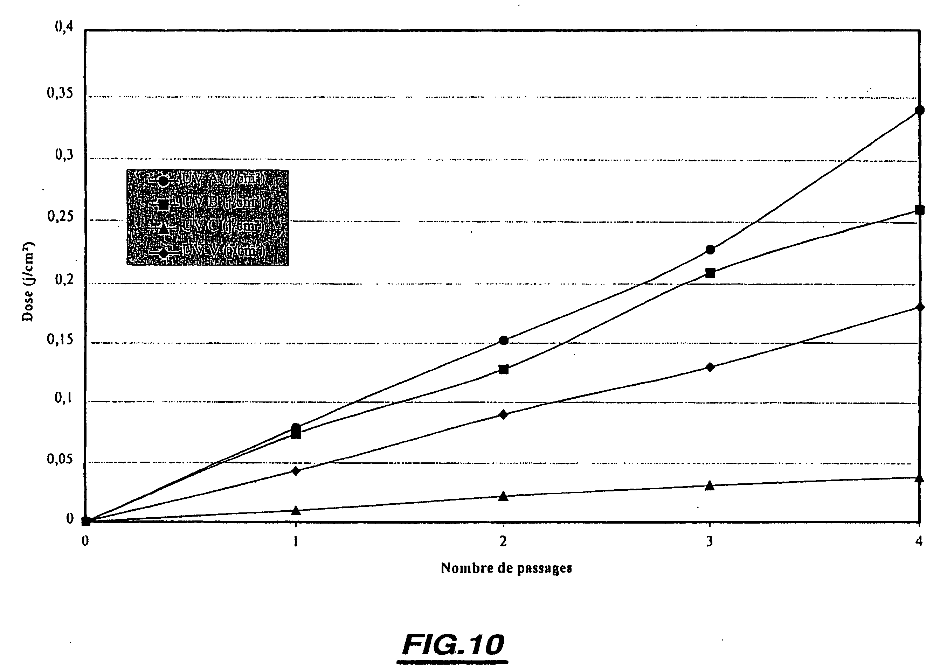

Plusieurs passages sous la lampe peuvent être réalisés. La figure 10 rend compte de la dose reçue en fonction du nombre de passages réalisé sous lampe UV, cette mesure est réalisée à l'aide d'un Power Puck ® de la société EIT. Le complexe est ensuite séparé par un test de pelage. Ce test de pelage est réalisé avec un angle de 180° et une vitesse de 300 mm/min comme décrit dans la norme FINAT3.

La valeur d'adhérence est comparée avec celle obtenue sur un complexe non irradié.

### EXEMPLE 1

La formulation silicone utilisée est l'huile époxydée identifiée en "Matériels et méthode".

L'additif utilisé est l'huile silicone acrylate décrite précédemment. Elle est ajoutée à 3 concentrations différentes : 5, 10 et 20 % en poids du revêtement silicone.

Les compositions détaillées sont données (en poids) dans le tableau I suivant :

**TABLEAU I**

| Formulation | EDCM3 A | EDCM5R | EDCM3B | EDCM4Q |
|---|---|---|---|---|
| Huile époxydée | 100 | 95 | 90 | 80 |
| Photo amorceur | 2,5 | 2,5 | 2,5 | 2,5 |
| Huile acrylate | 0 | 5 | 10 | 20 |

A ces teneurs, l'additif est parfaitement miscible. L'enduction sur le support polypropylène ainsi que la polymérisation des mélanges correspondants ne soulèvent aucun problème : pas de manifestation d'aspect huileux, de démouillage ou de rub off (gommage au toucher).

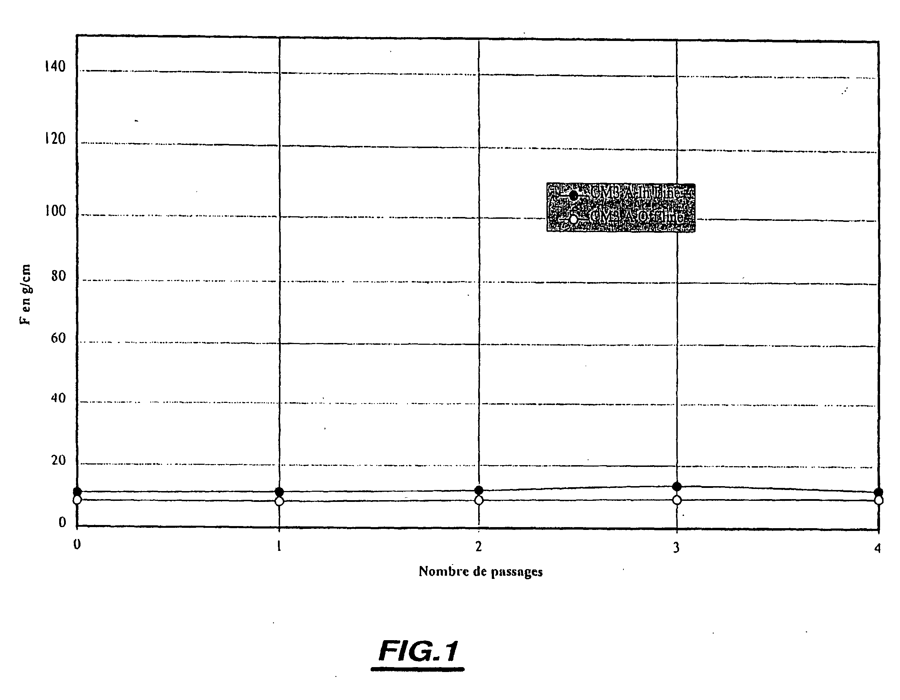

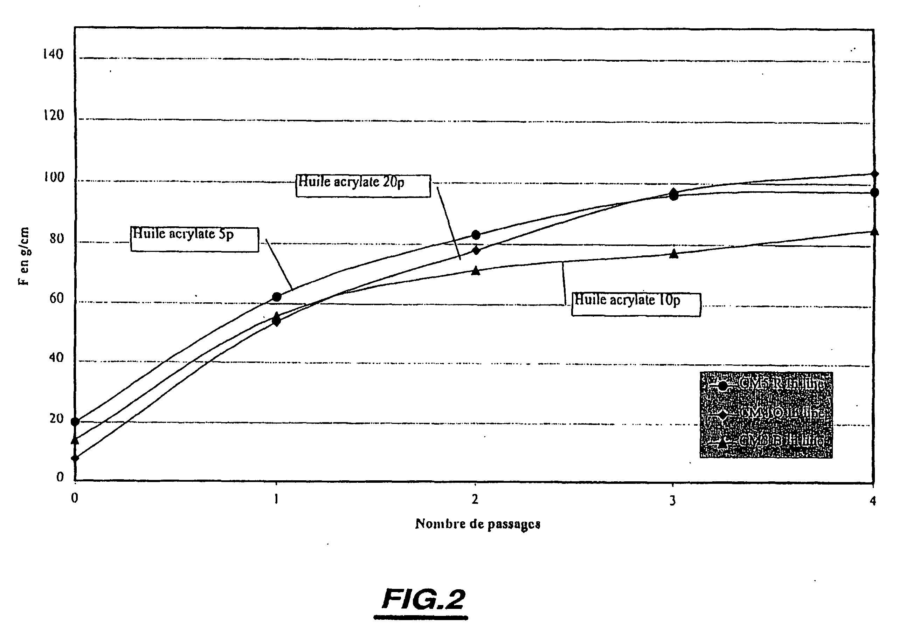

Ces enductions sont ensuite adhésivées avec un ruban adhésif TESA® 4970. Deux types d'application de l'adhésif sont réalisés : soit instantanément après polymérisation (selon un procédé dit " in line "), soit 15 minutes après enduction / polymérisation (selon un procédé dit " off line "). Elles subissent ensuite dans l'heure qui suit la fabrication du complexe, différents cycles d'irradiation. Ces cycles consistent à réaliser un ou plusieurs passages successifs sous la lampe UV du banc IST réglée à une puissance de 160W/cm et à une vitesse de passage de 50m/mn. La force d'adhérence du TESA® 4970 est mesurée dans la journée à l'aide du test de pelage défini précédemment. Les résultats obtenus sont présentés en figures 1 et 2.

On note que l'irradiation provoque une augmentation de la force de décollement pour les formulations contenant l'additif conforme à la présente invention. Il n'y a en revanche aucun effet de l'irradiation sur la formulation non additivée. A l'évidence, la concentration en additif a également un impact au niveau de la force de décollement. La force de décollement varie en effet en fonction de la concentration en additif. Par ailleurs, la force de décollement augmente de manière pratiquement linéaire avec le nombre de passages sous la lampe UV. On atteint ainsi des forces de 100g/cm (40 cN/inch) après 4 passages.

Pour évaluer la stabilité de l'effet modulant obtenu, la formulation conforme à l'invention a par ailleurs été testée à l'issue d'un cycle de vieillissement accélérée. Ce cycle est notamment imposé en soumettant le complexe pendant 6 jours à une température de 70°C. Ces conditions sont sensées représenter un vieillissement naturel du complexe d'une durée de 6 mois.

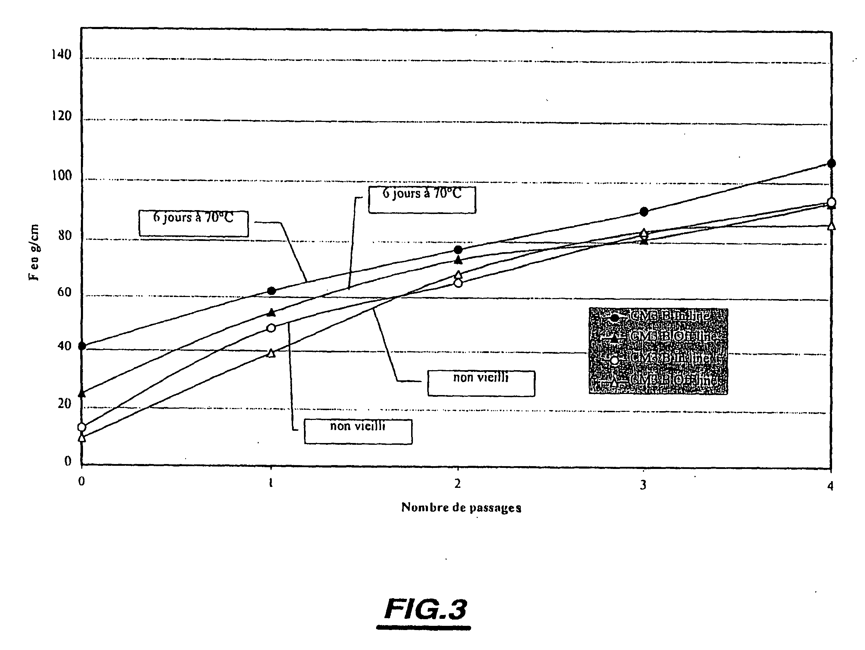

Les résultats obtenus sont présentés en figure 3.

Trois autres rubans adhésifs de la gamme Rhodotak® de Rhodia ont aussi été évalués avec la formulation contenant 5% d'huile acrylate. Il s'agit
Du Rhodotak® 315P: adhésif acrylique permanent non tackifié
Du Rhodotak® 338J : adhésif acrylique permanent tackifié
Du Rhodotak® 300 : adhésif acrylique enlevable

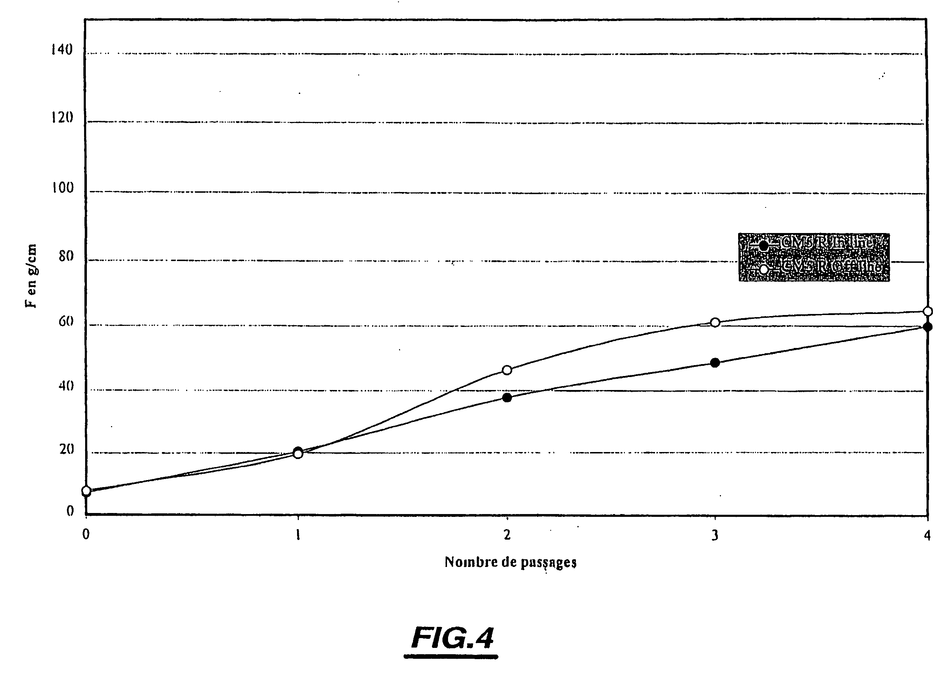

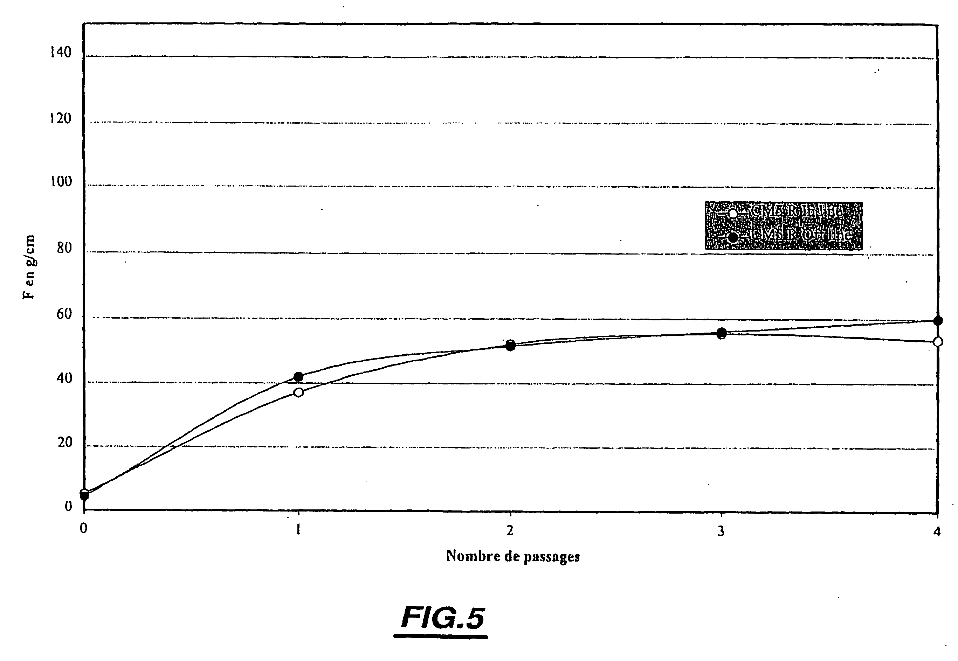

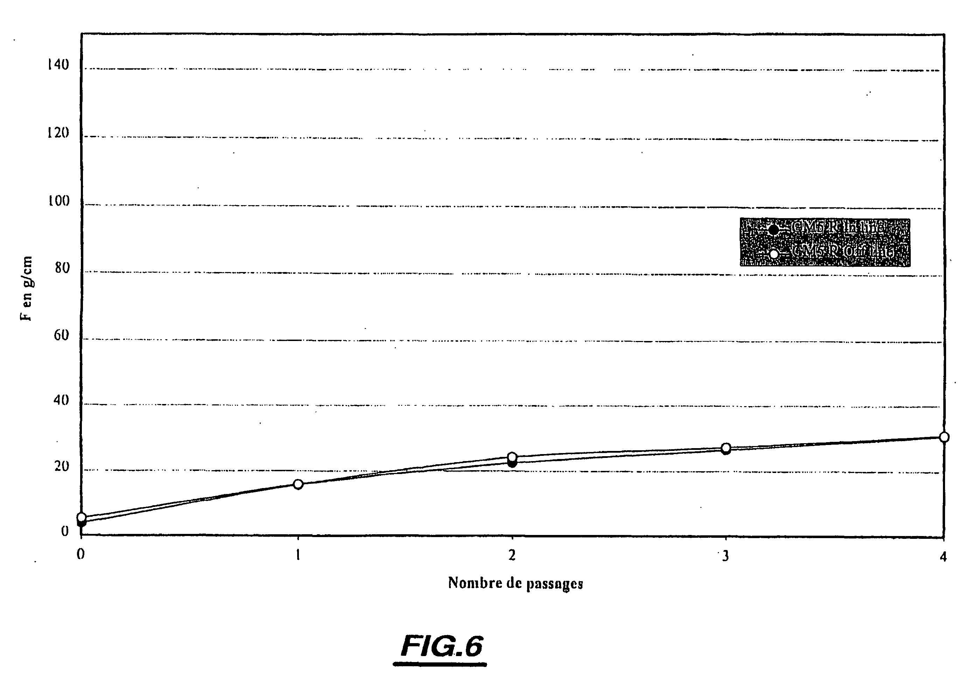

Les résultats d'adhérence sont consignés sur les figures 4/5/6. On note avec tous ces adhésif une augmentation de la force de décollement avec le nombre de passage sous la lampe UV.

### EXEMPLE 2

Dans cet exemple, l'additif testé est le triméthylpentanedioltriacrylate (TMPTA).

Les formulations dans lesquelles il a été ajouté, ont les compositions présentées en tableau II :

**TABLEAU II**

| Formulation | EDCM3 A | EDCM5U | EDCM3F |
|---|---|---|---|
| Huile époxydée | 100 | 99,66 | 100 |
| Photo amorceur | 2,5 | 2,5 | 2,5 |
| Additif acrylique | 0 | 0,34 | 5 |

Le TMPTA y a été ajouté à deux taux : 0,34 et 5 % en poids.

Le mélange à 0,34 % est miscible alors que le mélange à 5 % ne l'est pas.

Les conditions de mise en oeuvre sont identiques à celles retenues dans l'exemple précédent.

L'enduction sur le support polypropylène ainsi que la polymérisation des mélanges ne soulèvent aucun problème.

Comme précédemment, ces enductions sont adhésivées avec l'adhésif TESA® 4970 et le complexe est irradié dans différentes conditions.

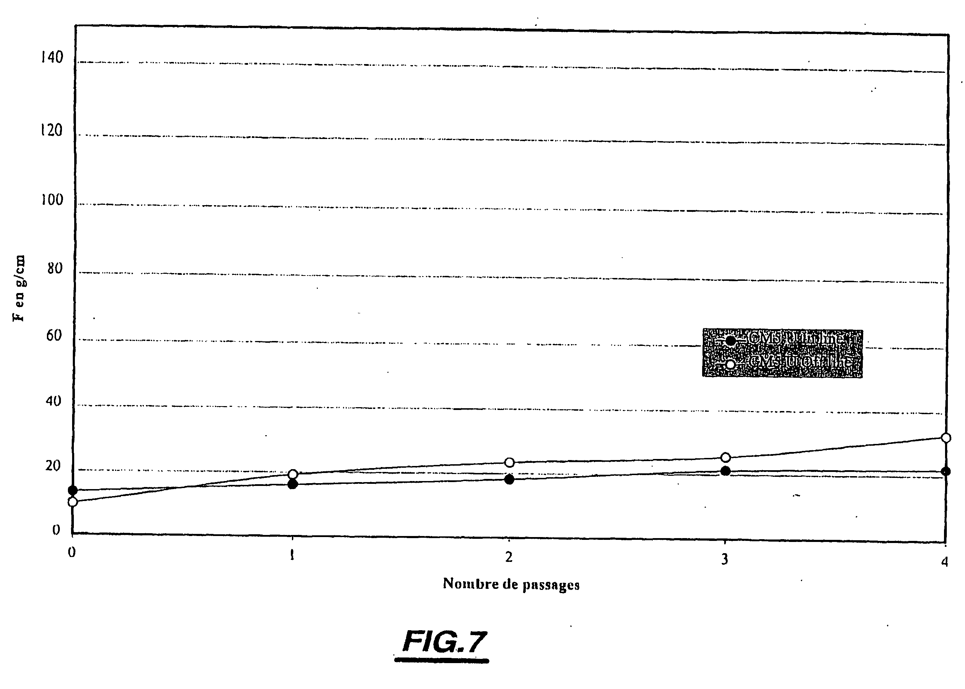

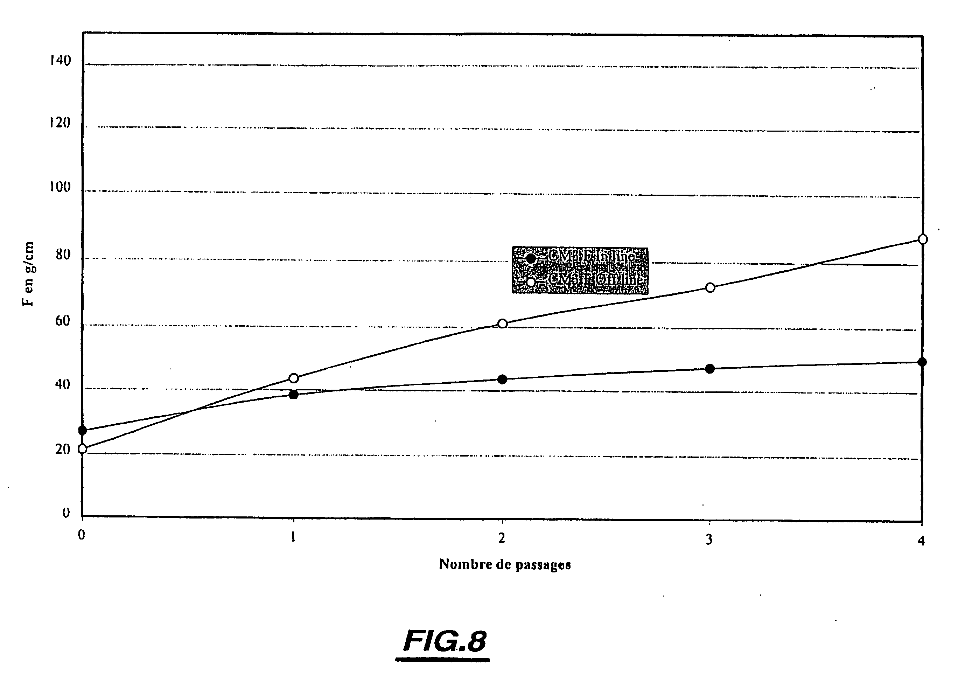

On mesure la force d'adhérence à l'aide du test de pelage. Les résultats obtenus sont représentés en figures 7 et 8.

On note une augmentation de la force de décollement avec le nombre de cycles d'irradiation ainsi qu'un impact de la concentration en additif sur ladite force.

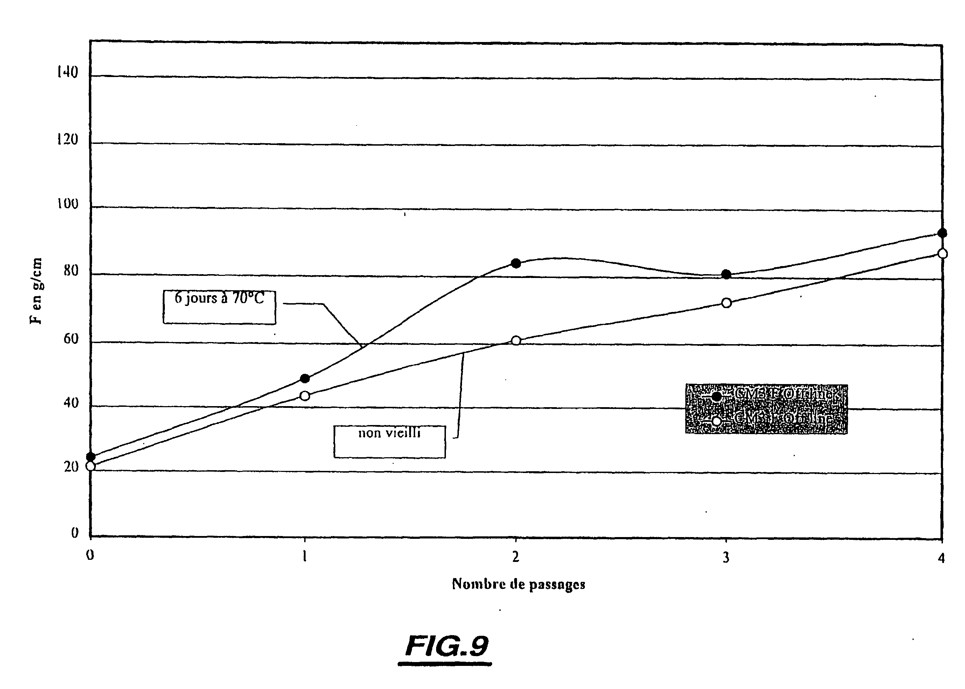

En figure 9, est représentée la stabilité des forces de l'adhésivité après un cycle de vieillissement tel que défini dans l'exemple précédent. Cette stabilité est satisfaisante.

## Revendications

1. Utilisation d'un additif choisi parmi les acryliques organiques, alcényléthers ou siliconés acryliques et/ou à fonctions alcényléthers, dans un revêtement silicone dérive de la polymérisation et/ou réticulation par voie cationique de monomères, oligomères et/ou polymères polyorgariosiloxanes portant à titre de groupements réactifs au moins des fonctions époxy, oxétane, dioxolane et/ou alcényléther et destiné à former un complexe silicone/adhésif comprenant au moins un revêtement silicone appliqué sur un premier support et un revêtement adhésif appliqué sur un second support, pour moduler la force de décollement d'une interface silicone/adhésif par activation photochimique dudit additif.

2. Utilisation selon la revendication 1, **caractérisée en ce que** les deux supports sont constitués de deux entités distinctes, disposées de manière à ce que le revêtement de silicone du premier support soit en contact avec le revêtement adhésif du second support.

3. Utilisation selon le revendication 1, **caractérisée en ce que** les deux supports sont constitués respectivement par chacune des deux faces d'une même entité.

4. Utilisation selon l'une des revendications 1 à 3, **caractérisée en ce que** l'activité de l'additif de régulation de la force de décollement est initiée et modulable par exposition d'au moins l'interface silicone/adhésif à au moins une irradiation UV.

5. Utilisation selon la revendication 4, **caractérisée en ce que** l'additif de régulation de la force de décollement est un acrylique organique choisi parmi les espèces acrylates et notamment acrylates epoxydés, acryloglycéropolyesters, acrylates multifonctionnels, acrylo-urétanes, acrylopolyéthers, acrylopolyesters, polyesters insaturés, acryloacryliques.

6. Utillsation selon l'une des revendications 1 à 4, **caractérisée en ce que** l'additif de régulation de la force de décollement est un silicone acrylique et/ou à fonctions alcényléther.

7. Utilisation selon la revendication 6, **caractérisée en ce que** les silicones acryliques sont choisis parmi les polyorganosiloxanes à fonction acrylate et/ou méthacrylate liées à la chaîne polysiloxane par une liaison Si-C.

8. Utilisation selon l'une des revendications précédentes, **caractérisée en que** l'additif de régulation de la force de décollement est employé à raison de 0,1 à 20 % en poids du mélange total silicone.

9. Utilisation selon l'une des revendications précédentes, **caractérisée en ce que** les monomères, oligomères et/ou polymères polyorganosiloxane à groupements organofonctionnels sont constitués de motifs de formule (II) et terminés par des motifs de formule (I) ou cycliques constitués de motifs de formule (II) représentées ci-dessous : 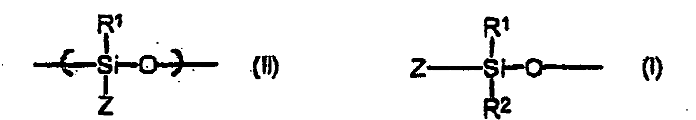 dans lesquelles :
- les symboles R¹ et R² sont, semblables ou différents et représentent :
un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
· un radical cycloalkyle contenant entre 5 et 8 atomes de carbone cycliques, éventuellement substitué,
· un radical aryle contenant entre 6 et 12 atomes de carbone pouvant être substitué, de préférence phényle ou dichlorophényle,
· une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
- les symboles Z sont semblables ou différents et représentent :
· un groupement R¹ et/ou R²,
· un radical hydrogène,
· et/ou un groupement organofonctionnel réticulable, de préférence un groupement époxyfonctionnel, oxétanefonctionnel et/ou dioxolanefonctionnel et/ou vinylétherfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
· et l'un au moins des symboles Z représentant un groupement organique fonctionnel réticulable.

10. Utilisation selon la revendication 9, **caractérisée en ce que** les groupements organofonctionnels sont choisis parmi : 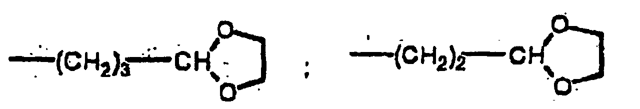 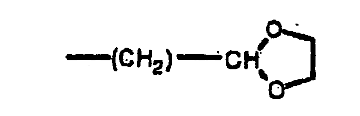 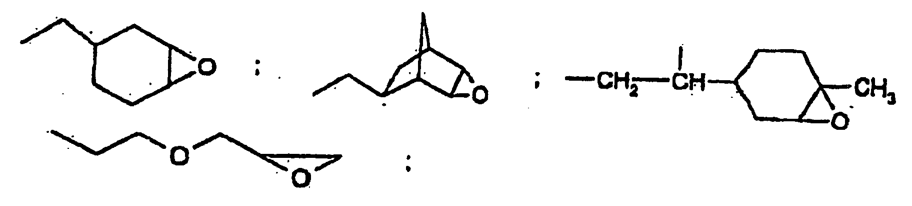 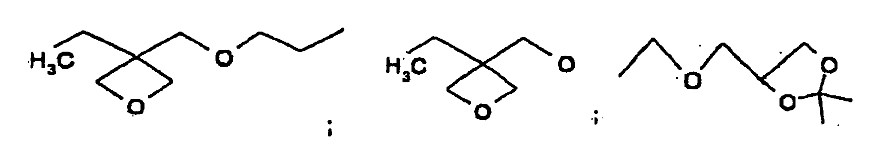 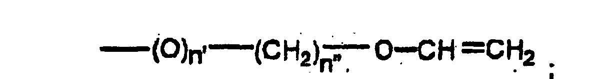 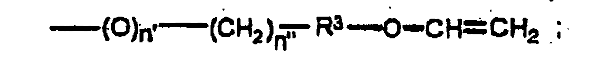 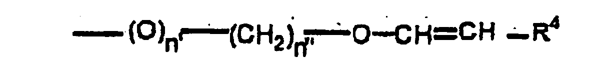 dans lesquelles :
• n' représente 0 ou 1 et n" un entier compris entre 1 et 5
• R³ représente :
- un radical alkylène linéaire, ramifié ou cyclique en C₁-C₁₂, éventuellement substitué.
- ou un radical arylène en C₆-C₁₂, de préférence phénylène, éventuellement substitué, de préférence par un à trois groupements alkyles en C₁-C₈.
• R⁴ représente un radical alkyle linèaire ou ramifié en C₁-C₈.

11. Utilisation selon l'une des revendications précédentes, **caractérisée en ce que** le revêtement silicone est une matrice à base d'une huile silicone époxydée.

12. Utilisation selon l'une des revendications précédentes, **caractérisée en ce que** le revêtement adhésif dérive d'une émulsion adhésive sensible à la pression dérivant de polymères acryliques.

13. Utilisation selon la revendication 11, **caractérisée en ce que** l'émulsion adhésive sensible à la pression est obtenue par polymérisation majoritairement de monomères acrylates présents à raison de 50 à environ 90 % et de préférence à raison de 80 à 99 % en poids et le cas échéant de monomères radicalaires copolymérisables.

14. Utilisation selon la revendication 13, **caractérisée en ce que** les monomères sont choisis dans le groupe constitué :
- des esters(méth)acryliques comme les esters de l'acide acrylique et de l'acide méthacrylique avec les alcanols en C₁-C₁₂ hydrogénés ou fluorés, de préférence C₁-C₈, notamment l'acrylate de méthyle, l'acrylate d'éthyle, l'acrylate de propyle, l'acrylate de n-butyle, l'acrylate d'isobutyle, l'acrylate de 2-éthylehexyle, l'acrylate de tert-butyle, l'acrylate d'hexyle, l'acrylate d'heptyle, l'acrylate d'octyle, l'acrylate d'iso-octyle, l'acrylate de décyle, l'acrylate de dodécyle, le méthacrylate de méthyle, le méthacrylate d'éthyle, le méthacrylate de n-butyle, le méthacrylate d'isobutyle ;
- des nitriles vinyliques dont plus particulièrement ceux ayant de 3 à 12 atomes de carbone, comme en particulier l'acrylonitrile et le méthacrylonitrile ;
- des esters vinyliques d'acide carboxylique comme l'acétate de vinyle, le versatate de vinyle, le propionate de vinyle,
- des acides mono- et di- carboxyliques insaturés éthyléniques comme l'acide acrylique, l'acide méthacrylique, l'acide itaconique, l'acide maléique, l'acide fumarique et les mono- et di-alkylesters des acides mono- et di-carboxyliques du type cité avec les alcanols ayant de préférence 1 à 8 atomes de carbone et leurs dérivés N-substitués,
- des amides des acides carboxyliques insaturés comme l'acrylamide, le méthacrylamide, le N-méthylolacrylamide ou méthacrylamide, les N-alkylacrylamides,
- des monomères éthyléniques comportant un groupe acide sulfonique et ses sels alcalins ou d'ammonium par exemple l'acide vinylsulfonique, l'acide vinylbenzènesulfonique, l'acide alpha-acrylamido méthylpropane-sulfonique, le 2-sulfoéthylène-méthacrylate,
- des monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate ou diméthylaminoéthyl-méthacrylate, le ditertiobutylaminoéthyl-acrylate ou le ditertiobutylaminoéthyl-méthacrylate, le diméthylaminométhyl-acrylamide ou diméthylaminométhyl-méthacrylamide,
- des monomères zwitterioniques comme par exemple l'acrylate de sulfopropyl(diméthyl)aminopropyle,
- des monomères éthyléniques portant un groupement sulfate,
- des monomères éthyléniques portant une ou plusieurs fonction(s) phosphate et/ou phosphonate,
- et leurs mélanges.

## Claims

1. Use of an additive selected from among the organic acrylic alkenylethers or acrylic silicones and/or silicones having alkenylether functions in a silicone coating derived from the cationic polymerisation and/or cross-linking of polyorganosiloxane monomers, oligomers and/or polymers having as reactive groups at least epoxy, oxetane, dioxolane and/or alkenylether functions and intended to form a silicone/adhesive complex comprising at least one silicone coating applied to a first support and an adhesive coating applied to a second support, in order to modulate the detachment force of a silicone/adhesive interface by photochemical activation of said additive.

2. Use according to claim 1, **characterised in that** the two supports consist of two distinct entities arranged so that the silicone coating of the first support is in contact with the adhesive coating of the second support.

3. Use according to claim 1, **characterised in that** the two supports respectively consist of each of the two sides of the same entity.

4. Use according to one of claims 1 to 3, **characterised in that** the activity of the additive for regulating the detachment force is initiated and capable of modulation by exposure of at least the silicone/adhesive interface to at least one UV irradiation.

5. Use according to claim 4, **characterised in that** the additive for regulating the detachment force is an organic acrylic selected from the acrylates and particularly epoxidised acrylates, acryloglyceropolyesters, multifunctional acrylates, acrylourethanes, acrylopolyethers, acrylopolyesters, unsaturated polyesters and acryloacrylics.

6. Use according to one of claims 1 to 4, **characterised in that** the additive for regulating the detachment force is an acrylic silicone and/or an silicone with alkenylether functions.

7. Use according to claim 6, **characterised in that** the acrylic silicones are selected from among the polyorganosiloxanes with an acrylate and/or methacrylate function linked to the polysiloxane chain by an Si-C bond.

8. Use according to one of the preceding claims, **characterised in that** the additive for regulating the detachment force is used in an amount of 0.1 to 20% by weight of the total silicone mixture.

9. Use according to one of the preceding claims, **characterised in that** the polyorganosiloxane monomers, oligomers and/or polymers with functional organic groups consist of units of formula (II) and terminate in units of formula (I) or cyclic units consisting of units of formula (II) shown hereinafter: 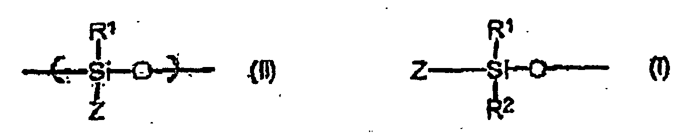 wherein:
the symbols R¹ and R² are identical or different and represent:
• a straight-chain or branched alkyl radical containing 1 to 8 carbon atoms, optionally substituted by at least one halogen, preferably fluorine, the alkyl radicals preferably being methyl, ethyl, propyl, octyl and 3,3,3-trifluoropropyl,
• an optionally substituted cycloalkyl radical containing between 5 and 8 cyclic carbon atoms,
• an aryl radical containing between 6 and 12 carbon atoms which may be substituted, preferably phenyl or dichlorophenyl,
• an aralkyl moiety having an alkyl moiety containing between 5 and 14 carbon atoms and an aryl moiety containing between 6 and 12 carbon atoms, optionally substituted at the aryl moiety by halogens, alkyls and/or alkoxyls containing 1 to 3 carbon atoms,
- the symbols Z are identical or different and denote:
• a group R¹ and/or R²,
• a hydrogen radical,
• and/or a cross-linkable functional organic group, preferably a functional epoxy group, functional oxetane and/or functional dioxolane and/or functional vinyl ether group, linked to the silicon of the polyorganosiloxane via a divalent radical containing from 2 to 20 carbon atoms and possibly containing at least one heteroatom, preferably oxygen,
• and at least one of the symbols Z denoting a cross-linkable functional organic group.

10. Use according to claim 9, **characterised in that** the functional organic groups are selected from among: 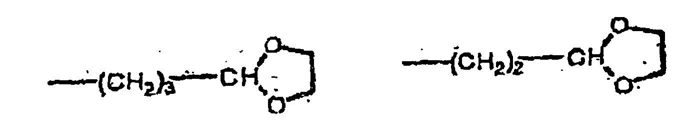 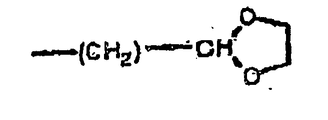 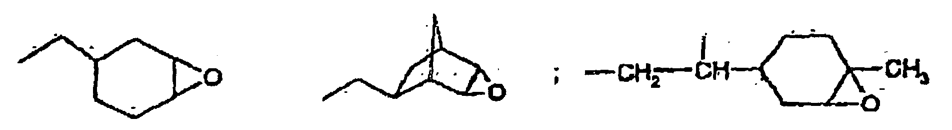 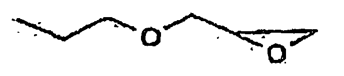 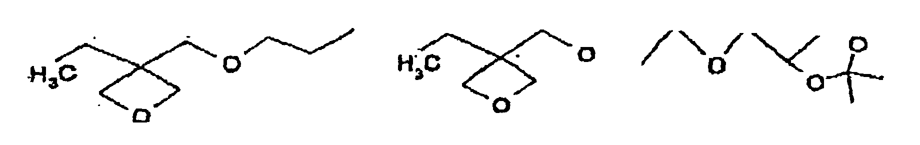 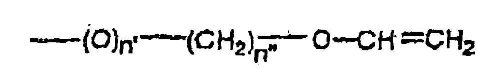 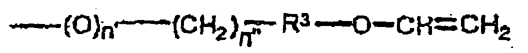 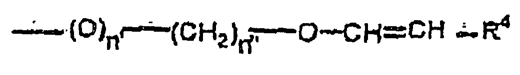 wherein
• n' denotes 0 or 1 and n" denotes an integer between 1 and 5
• R³ denotes:
■ an optionally substituted straight-chain, branched or cyclic C₁₋₁₂ alkylene radical,
■ or a C₆₋₁₂ arylene radical, preferably phenylene, optionally substituted, preferably by one to three C₁₋₆ alkyl groups,
• R⁴ denotes a straight-chain or branched C₁₋₁₈ alkyl radical.

11. Use according to one of the preceding claims, **characterised in that** the silicone coating is a matrix based on an epoxidised silicone oil.

12. Use according to one of the preceding claims, **characterised in that** the adhesive coating is derived from a pressure-sensitive adhesive emulsion obtained from acrylic polymers.

13. Use according to claim 11, **characterised in that** the pressure-sensitive adhesive emulsion is obtained by polymerisation of mainly acrylate monomers present in amounts of 50 to about 90% and preferably from 80 to 99% by weight and, if applicable, copolymerisable radical monomers.

14. Use according to claim 13, **characterised in that** the monomers are selected from the group comprising:
(meth) acrylic esters such as the esters of acrylic acid and methacrylic acid with hydrogenated or fluorinated C₁₋₁₂ alkanols, preferably C₁₋₈ alkanols, notably methyl acrylate, ethyl acrylafe, propyl acrylate, n-butyl acrylate, isobutyl acrylate, 2-ethylhexyl acrylate, tert. butyl acrylate, hexyl acrylate, heptyl acrylate, octyl acrylate, isooctyl acrylate, decyl acrylate, dodecyl acrylate, methyl methacrylate, ethyl methacrylate, n-butyl methacrylate and isobutyl methacrylate;
vinyl nitriles, more particularly those having 3 to 12 carbon atoms, such as in particular acrylonitrile and methacrylonitrile;
vinyl esters of carboxylic acid such as vinyl acetate, vinyl versatate and vinyl propionate,
ethylenically unsaturated mono- and dicarboxylic acids such as acrylic acid, methacrylic acid, itaconic acid, maleic acid, fumaric acid and the mono- and dialkyl esters of the mono- and dicarboxylic acids of the type mentioned, with alkanols preferably having 1 to 8 carbon atoms and the N-substituted derivatives thereof,
amides of unsaturated carboxylic acids such as acrylamide, methacrylamide, N-methylolacrylamide or methacrylamide, the N-alkylacrylamides,
ethylene monomers comprising a sulphonic acid group and the alkali metal or ammonium salts thereof, for example vinylsulphonic acid, vinylbenzenesulphonic acid, alpha-acrylamido-methylpropanesulphonic acid, 2-sulphoethylene-methacrylate,
ethylenically unsaturated monomers comprising a secondary, tertiary or quaternary amino group, or a heterocyclic group containing nitrogen, such as, for example, the vinylpyridines, vinylimidazole, the aminoalkyl (meth)acrylates and the aminoalkyl (meth)acrylamides such as dimethylaminoethyl acrylate or dimethylaminoethyl methacrylate, di-tert. butylaminoethyl acrylate or di-tert. butylaminoethyl methacrylate, dimethylaminomethyl acrylamide or dimethylaminomethyl methacrylamide,
zwitterionic monomers such as, for example, sulphopropyl(dimethyl)aminopropyl acrylate,
ethylene monomers having a sulphate group,
ethylene monomers having one or more phosphate and/or phosphonate function(s),
and the mixtures thereof.

## Patentansprüche

1. Verwendung eines Additivs, das aus organischen Acrylverbindungen, Alkenylethern oder Siliconen, die acrylisch und/oder mit Alkenyletherfunktionen sind, für eine Siliconbeschichtung, die aus der kationischen Polymerisation und/oder Vernetzung von monomeren, oligomeren und/oder polymeren Polyorganosiloxanen, die als reaktive Gruppen mindestens Epoxy-, Oxetan-, Dioxolan- und/oder Alkenyletherfunktionen tragen, abgeleitet und vorgesehen ist, einen Silicon/Klebstoff-Verbund, der mindestens eine auf einem ersten Träger aufgebrachte Siliconbeschichtung und eine auf einem zweiten Träger aufgebrachte Haftbeschichtung umfasst, zu bilden, um die Ablösekraft an einer Grenzfläche von Silicon/Klebstoff durch photochemische Aktivierung des Additivs zu verändern.

2. Verwendung nach Anspruch 1, **dadurch gekennzeichnet, dass** die zwei Träger aus zwei unterschiedlichen Ganzheiten bestehen, die derart angeordnet sind, dass sich die Siliconbeschichtung des ersten Trägers mit der Haftbeschichtung des zweiten Trägers in Berührung befindet.

3. Verwendung nach Anspruch 1, **dadurch gekennzeichnet, dass** die zwei Träger aus jeweils einer Seite der zwei Seiten ein und derselben Ganzheit bestehen.

4. Verwendung nach einem der Ansprüche 1 bis 3, **dadurch gekennzeichnet, dass** die Wirksamkeit des Additivs zur Einstellung der Ablösekraft durch mindestens eine UV-Bestrahlung wenigstens der Grenzfläche Silicon/Klebstoff ausgelöst wird und veränderbar ist.

5. Verwendung nach Anspruch 4, **dadurch gekennzeichnet, dass** das Additiv zur Einstellung der Ablösekraft eine organische Acrylverbindung ist, die aus Acrylaten und insbesondere epoxidierten Acrylaten, Acrylglyceropolyestern, multifunktionellen Acrylaten, Acrylurethanen, Acrylpolyethern, Acrylpolyestern, ungesättigten Polyestern und Acrylacrylverbindungen ausgewählt ist.

6. Verwendung nach einem der Ansprüche 1 bis 4, **dadurch gekennzeichnet, dass** das Additiv zur Einstellung der Ablösekraft ein Acrylsilicon und/oder ein Silicon mit Alkenyletherfunktionen ist.

7. Verwendung nach Anspruch 6, **dadurch gekennzeichnet, dass** die Acrylsilicone aus Polyorganosiloxanen mit Acrylat- und/oder Methacrylatfunktion, die mit der Polysiloxankette durch eine Si-C-Bindung verbunden sind, ausgewählt sind.

8. Verwendung nach einem der vorhergehenden Ansprüche, **dadurch gekennzeichnet, dass** das Additiv für die Einstellung der Ablösekraft mit einem Anteil von 0,1 bis 20 Gew.% des gesamten Silicongemischs eingesetzt wird.

9. Verwendung nach einem der vorhergehenden Ansprüche, **dadurch gekennzeichnet, dass** die monomeren, oligomeren und/oder polymeren Polyorganosiloxane mit organofunktionellen Gruppen aus Grundeinheiten mit der Formel (II) bestehen und von Grundeinheiten mit der Formel (I) oder Cyclen, die aus Grundeinheiten mit der Formel (II) bestehen, terminiert werden, die anschließend wiedergegeben werden: 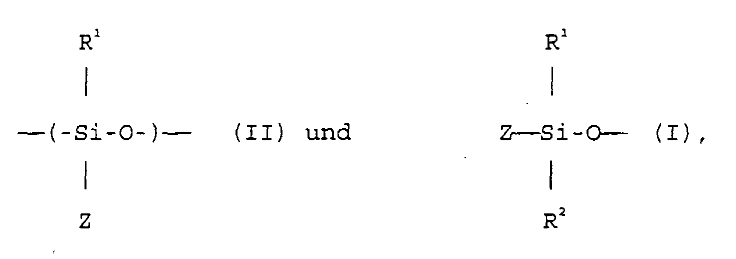 in welchen
- die Symbole R¹ und R² einander gleich oder verschieden sind und
• einen geradkettigen oder verzweigten Alkylrest, der 1 bis 8 Kohlenstoffatome enthält und gegebenenfalls durch mindestens ein Halogenatom, vorzugsweise Fluor, substituiert ist, wobei die Alkylreste vorzugsweise Methyl, Ethyl, Propyl, Octyl und 3,3,3-Trifluorpropyl bedeuten,
• einen Cycloalkylrest, der 5 bis 8 gegebenenfalls substituierte cyclische Kohlenstoffatome enthält,
• einen Arylrest, der 6 bis 12 Kohlenstoffatome, die substituiert sein können, vorzugsweise Phenyl oder Dichlorphenyl, umfasst, und
• einen Aralkylteil, der einen 5 bis 14 Kohlenstoffatome enthaltenden Alkylteil und einen 6 bis 12 Kohlenstoffatome enthaltenden Arylteil besitzt, wobei der Arylteil gegebenenfalls mit Halogen- und 1 bis 3 Kohlenstoffatome enthaltenden Alkyl- und/oder Alkoxylresten substituiert ist,
bedeuten und
- die Symbole Z einander gleich oder verschieden sind und
• eine Gruppe R¹ und/oder R²,
• einen Wasserstoffrest und/oder
• eine vernetzbare organofunktionelle Gruppe, vorzugsweise eine epoxyfunktionelle, oxetanfunktionelle und/oder dioxolanfunktionelle und/oder vinyletherfunktionelle Gruppe, die an das Silicium des Polyorganosiloxans über einen zweiwertigen Rest gebunden ist, der 2 bis 20 Kohlenstoffatome enthält und mindestens ein Heteroatom, vorzugsweise Sauerstoff, enthalten kann, bedeuten und
• mindestens eines der Symbole Z eine vernetzbare funktionelle organische Gruppe bedeutet.

10. Verwendung nach Anspruch 9, **dadurch gekennzeichnet, dass** die organofunktionellen Gruppen ausgewählt sind aus 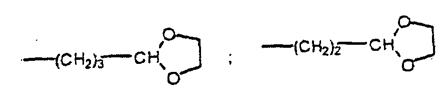 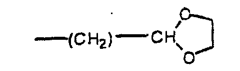 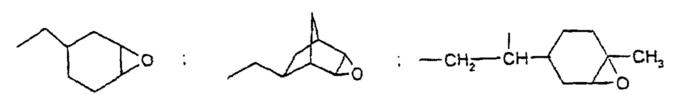 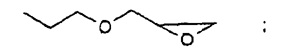 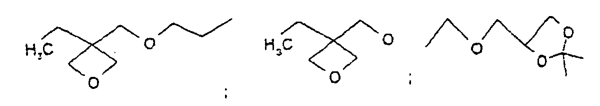 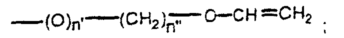 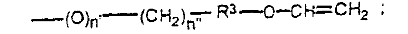 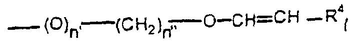 in welchen
• n' 0 oder 1 und n" eine ganze Zahl von 1 bis 5,
• R³
- einen gegebenenfalls substituierten geradkettigen, verzweigten oder cyclischen C₁- bis C₁₂-Alkylenrest oder
- einen C₅- bis C₁₂-Arylenrest, vorzugsweise Phenylenrest, der gegebenenfalls, vorzugsweise mit einer bis drei C₁- bis C₆-Alkylgruppen substituiert ist, und
• R⁴ einen geradkettigen oder verzweigten C₁- bis C₆-Alkylrest bedeutet.

11. Verwendung nach einem der vorhergehenden Ansprüche, **dadurch gekennzeichnet, dass** die Siliconbeschichtung eine Matrix auf der Basis eines epoxidierten Siliconöls ist.

12. Verwendung nach einem der vorhergehenden Ansprüche, **dadurch gekennzeichnet, dass** die Haftbeschichtung von einer von Acrylpolymeren abgeleiteten druckempfindlichen, haftfähigen Emulsion abgeleitet ist.

13. Verwendung nach Anspruch 11, **dadurch gekennzeichnet, dass** die druckempfindliche haftfähige Emulsion durch Polymerisation von überwiegend Acrylatmonomeren, die mit einem Anteil von 50 bis etwa 90 Gew.% und vorzugsweise 80 bis 99 Gew.% vorliegen, und gegebenenfalls copolymerisierbaren radikalischen Monomeren erhalten worden ist.

14. Verwendung nach Anspruch 13, **dadurch gekennzeichnet, dass** die Monomeren aus der Gruppe ausgewählt sind, die aus
- (Meth-)Acrylsäureestern wie Estern der Acrylsäure und Methacrylsäure mit hydrierten oder fluorierten C₁- bis C₁₂- und vorzugsweise C₁- bis C₈-Alkanolen, insbesondere Methylacrylat, Ethylacrylat, Propylacrylat, n-Butylacrylat, Isobutyacrylat, 2-Ethylhexylacrylat, *tert*.-Buylacrylat, Hexylacrylat, Heptylacrylat, Octylacrylat, Isooctylacrylat, Decylacrylat, Dodecylacrylat, Methylmethacrylat, Ethylmethacrylat, n-Butylmethacrylat und Isobutylmethacrylat,
- Vinylnitrilen, davon insbesondere diejenigen mit 3 bis 12 Kohlenstoffatomen, wie speziell Acrylnitril und Methacrylnitril,
- Carbonsäurevinylestern wie Vinylacetat, Vinylversatat und Vinylpropionat,
- ethylenisch ungesättigten Mono- und Dicarbonsäuren wie Acrylsäure, Methacrylsäure, Itaconsäure, Maleinsäure und Fumarsäure und Mono- und Dialkylestern der Mono- und Dicarbonsäuren des genannten Typs mit Alkanolen mit vorzugsweise 1 bis 8 Kohlenstoffatomen und deren N-substituierten Derivaten,
- Amiden ungesättigter Carbonsäuren wie Acrylamid, Methacrylamid, N-Methylolacrylamid oder Methacrylamid und N-Alkylacrylamide,
- ethylenischen Monomeren, die eine Sulfonsäuregruppe und deren Alkalimetall- oder Ammoniumsalze enthalten, beispielsweise Vinylsulfonsäure, Vinylbenzolsulfonsäure, α-Acrylamidomethylpropansulfonsäure und 2-Sulfoethylenmethacrylat,
- ethylenisch ungesättigten Monomeren, die eine sekundäre, tertiäre bzw. quartäre Aminogruppe oder eine Stickstoff enthaltende heterocyclische Gruppe umfassen, wie Vinylpyridine, Vinylimidazol, Aminoalkyl(meth)acrylate und Aminoalkyl(meth)acrylamide wie Dimethylaminoethylacrylat bzw. Dimethylaminoethylmethacrylat, Di-*tert*.butylaminoethylacrylat bzw. Di-*tert*.butylaminoethylmethacrylat, Dimethylaminomethylacrylamid bzw. Dimethylaminomethylmethacrylamid,
- zwitterionischen Monomeren wie Sulfopropyl(dimethyl)aminopropylacrylat,
- ethylenischen Monomeren, die eine Sulfatgruppe tragen,
- ethylenischen Monomeren, die eine oder mehrere Phosphat- und/oder Phosponatfunktionen tragen, und
- ihren Gemischen
besteht.
